# EUROPEAN PATENT APPLICATION

(11) **EP 3 367 073 A1**
(43) Date of publication of application: **29.08.2018**
(21) Application number: 17157646.5
(22) Date of filing: 23.02.2017
(51) Int. Cl.: G01F 11/40, G01F 11/36, G01F 11/38

(54) **COMBINED STORAGE, DOSING AND MIXING DEVICE**

(71) Applicant: Global Mark Plastic Limited, Hong Kong (HK)
(72) Inventor: WONG, Kin Pong Eddy, Kwun Tong, Hong Kong (HK)
(74) Representative: Burger, Hannes

(57) **Abstract**

The invention refers to a combined storage, dosing and mixing device (1), which comprises a first compartment (2) and a second compartment (3) and a dosing section (4) between the first compartment (2) and the second compartment (3). The dosing section (4) comprises a translatory movable slider (10, 10a) adjacent to the first compartment (2), a pivotally movable flap (11) adjacent to the second compartment (3) and a dosing space (C) between the slider (10, 10a) and the flap (11).

## Description

The invention relates to a combined storage, dosing and mixing device, which comprises a first compartment with a first container space and a second compartment with a second container space as well as a dosing section between the first compartment and the second compartment. Usually, the first (upper) container space is intended for dry powder or crumbs, which shall be dosed and mixed with a liquid in the second (lower) container space.

In this context EP 1 205 402 A2 discloses a dosing device for baby formula, which comprises a dosing space being bordered by sliders on the upper side and the lower side.

Furthermore, DE 10 2013 108 007 B3 discloses another dosing device for baby formula, which may comprise a dosing space being bordered by two sliders or by two flaps.

Prior art designs having sliders are prone to leakage between the second container space and the dosing space. If the lower slider is not perfectly sealed, held open or held open partly unintentionally while shaking the device, liquid may flow from the second container space into the dosing space or even into the first container space. This humidity may spoil the content of the first container space, which usually shall be kept dry. If such a contamination stays undetected for a longer time, even substances injurious to health may evolve.

Prior art designs having flaps instead of sliders suffer from the weight and the resistance of the content in the first container space acting against an upward movement of an upper flap, particularly when said content is agglomerated or clumped. In this case, opening the flap may get an impossible task and impatient users can induce high forces onto the device what may cause breakdown of fragile parts. Even if the upper flap is designed to swivel downwards what would offer an easy opening of the flap, it cannot move upwards when the content in the first compartment gets into the dosing space. But even if the flap closes, the dosing is compromised with high probability because the flap moves through the dosing space when it closes.

Accordingly, a problem of the invention is to provide an improved combined storage, dosing and mixing device. In particular, actuating the device shall not require high forces, dosing shall not be compromised and the content in the second container space shall not get into the dosing space or in the first container space.

The object of the invention is solved by means of a combined storage, dosing and mixing device as defined in the opening paragraph, wherein the dosing section comprises a translatory movable slider adjacent to the first compartment, a pivotally movable flap adjacent to the second compartment and a dosing space between the slider and the flap.

The combination of the upper slider and the lower flap offers several advantages. First, the movement of the slider cannot be hindered by the content in the first container space (e.g. powder and/or crumbs), even if the content is agglomerated or clumped. Second, the flap can easily be opened as the content in the dosing space does not act against a downward movement of the flap, but eases the downward movement. Accurate dosing is neither compromised by the upper slider nor by the lower flap. Furthermore, the mechanism does not desire high acting forces. Accordingly, the parts of the combined storage, dosing and mixing device may be designed fragile without the risk of breakdown.

The flap mechanism is also useful when shaking the device, as the liquid in the lower, second container space sloshing against the flap even increases the closing force acting on the flap and thus its seal effect. Accordingly, the content in the first container space stays dry under any condition.

By provision of a first compartment of appropriate size, many dosing sequences can be performed and by changing the liquid in the second compartment many servings may be prepared. In this context, one should note that also more than one doses may be mixed with one portion of liquid. Thus, the end product may be varied and adapted to personal preferences with high accuracy and repeatability.

The combined storage, dosing and mixing device may generally be used for any mixing task. Particularly, it is useful for baby formula, mixing protein shakes or milk shakes, preparing cereals, instant drinks, instant coffee, etc. Accordingly, the first container space may be filled with powder or crumbs or a mixture of both, and the second container space may be filled with water, milk or any other liquid (cold or hot).

Further advantageous embodiments are disclosed in the claims and in the description as well as in the Figures.

Advantageously, the flap just opens towards the second container space of the second compartment and stays out of the dosing space. In this way, dosing is not compromised, and the flap easily opens because it needs not to be pressed against the content in the dosing space.

Beneficially, the device comprises actuating means mechanically coupled to the slider and the flap. In this way, the movements of the slider and the flap may be controlled with a single action (i.e. a single activation). For this task, a kind of an operational or control block may be provided, which (mechanically) controls the movements of the slider and the flap. In particular, the operational block / control block is translatory moved. However, rotational movements and combined movements of the operational block / control block are applicable as well.

Advantageously, the actuating means are embodied to open the slider while the flap is closed in a first state or to open the flap while the slider is closed in a second state. In this way, the dosing sequence may be performed. In the first state, content in the first container space may flow into the dosing space, and in the second state content in the dosing space may flow into the second container space. Accordingly, the dosing section performs the function of a lock. There is no point in time, in which both the slider and the flap is open (considering an intended use of the device under normal conditions).

In yet another advantageous embodiment, the actuating means are embodied to keep the slider and the flap closed in a third state. Hence, the risk that liquid flows from the second container into the first container, or the risk that the content in the first container flows into the second container unintentionally is further reduced. In particular, the third state is reached when going from the first state to the second state or vice versa.

Beneficially, the device may comprise a lock, blocking respectively holding the actuating means in the first state or the third state, i.e. keeping the flap closed. By activating the lock, the actuating means cannot be actuated unintended, for example when the device is transported in a bag. Accordingly, the content in the first container space stays dry also in this condition.

Beneficially, the actuating means comprise a push button or an activating lever. In this way, the actuating means can easily be actuated.

In an advantageous embodiment, the device comprises a shocking lever mechanically coupled to the actuating means (or even being part of said means), which moves over bumps or ramps when the actuating means are activated and knocks against a wall of the device when it has passed the bump or ramp and is released. In this way, the content in the first container space is loosened and agglomerations and clumps are released. Hence, the dosing operation is eased respectively supported. The device may have one or more bumps and/or one or more ramps. Instead of bumps and ramps other elevations or indentations are applicable as well.

For basically the same reason, the device in yet another advantageous embodiment comprises a scratcher, which is part of the slider or connected thereto and which protrudes into the first container space. In this way, a movement of the slider causes a movement of the scratcher, which in turn scratches the bottom side of the content in the container space. Accordingly, said content is loosened and agglomerations and clumps are released. The proposed scratcher is particularly useful to loosen solidified hygroscopic powders and may be combined with the shocking lever disclosed above.

In the above context, it is also very advantageous if the scratcher is designed to move (particularly swivel) between a scratching position, in which it protrudes into the first container space, and an idle position, in which it is arranged in the plane of a base body of the slider. Accordingly, the scratcher may easily move into a recess of the body of the combined storage, dosing and mixing device in its idle position. The base body of the slider and the scratcher may be embodied as separate parts connected to each other by means of a hinge or may be one-piece. Moreover, the scratcher may also have fixed protrusions.

In a particular advantageous embodiment of the device, the flap just opens in the upright position of the device when the first compartment is positioned over the second compartment (and if the actuating means are activated) and is kept close in the upside-down position of the device when the first compartment is positioned below the second compartment, even if the actuating means are activated. Accordingly, liquid from the second container space cannot flow into the dosing space or even into the first container space, even if the device is held upside-down with the activating means pressed. Thus, the combined storage, dosing and mixing device is very user friendly, and it is almost impossible to use it in the wrong way. For this reason, the flap may comprise or may be equipped with a mechanism which depends on the gravity force. This means that the flap just opens with the activating means activated if the gravity force points through the device in a particular range of directions.

In yet another advantageous embodiment of the device, the actuating means comprise a recess cooperating with the flap, wherein the recess allows the flap to rotate in a dedicated position of the recess or in dedicated positions of the recess. A recess are reliable means for enabling a rotational movement of the flap or for hindering the same (if the recess is out of the range of releasing positions). It is particularly advantageous, if the recess enables or hinders a rotational movement but does not actively induce rotational forces into the flap, i.e. the flap advantageously opens on its own and the user needs not to induce force into the device to open the flap. Accordingly, the parts of the dosing mechanism may be designed fragile because just low activating forces are necessary.

In this context, it is advantageous if the flap is pivotally mounted by means of a pivot arranged at a distance from the dosing space and is heavier on the side of the pivot, which faces the dosing space than on the side facing the recess, when the device is in its first state and held in its upright position when the first compartment is positioned over the second compartment. Accordingly, the flap has a self tendency to open in the upright position of the device, thus providing some kind of an automatic gravity opening of the flap, but it has also a tendency to close in the upside-down position of the device, thus hindering the liquid to flow from the second container space into the dosing space or even into the first container space.

Advantageously, the recess is arranged above the flap when the device is held in its upright position and when the first compartment is positioned over the second compartment. Hence, an upward movement of the portion of the flap facing the recess and thus a downward movement of the portion of the flap facing the dosing space is hindered, when the recess is in the closed position, and said movements are enabled, if the recess is in the open position.

Finally, it is beneficial if the device comprises a spring keeping the actuating means respectively the slider and the flap in the first state or the third state when idled, i.e. when the actuating means are not activated or triggered. By these measure the flap is kept closed and the content in the first container space stays dry when the actuating means are not activated or triggered. In other words, the flap cannot open by chance.

For better understanding the invention, Figures showing embodiments of the invention are presented hereinafter. The Figures schematically show:
- Fig. 1: a cross sectional view of an example of a combined storage dosing and mixing device in a first state with open slider and closed flap;
- Fig. 2: the device of Fig. 1 in a second state with closed slider an open flap;
- Fig. 3: a detailed oblique view of a slider with a scratcher;
- Fig. 4: a detailed cross sectional view of the slider of Fig. 3 in its open position and
- Fig. 5: a detailed cross sectional view of the slider of Fig. 3 in its closed position.

Generally, same parts or similar parts are denoted with the same/similar names and reference signs. The features disclosed in the description apply to parts with the same/similar names respectively reference signs. Indicating the orientation and relative position (up, down, sideward, etc) is related to the associated Figure, and indication of the orientation and/or relative position has to be amended in different Figures accordingly as the case may be.

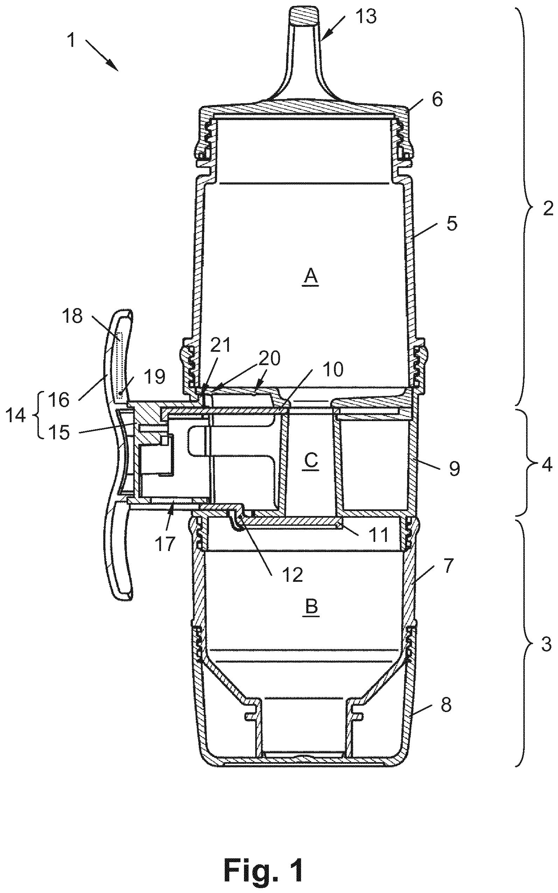

Fig. 1 shows an example of a combined storage, dosing and mixing device 1, comprising a first compartment 2 and a second compartment 3 and a dosing section 4 between the first compartment 2 and the second compartment 3. The first compartment 2 comprises a first tubular body 5 with a cover 6 screwed onto the first tubular body 5, and the second compartment 3 comprises a second tubular body 7 with a cup 8 screwed onto the second tubular body 7. The dosing section 4 comprises a third tubular body 9, onto which the first tubular body 5 and the second tubular body 7 is screwed. Furthermore, the dosing section 4 comprises a translatory movable slider 10 adjacent to the first compartment 2 and a pivotally movable flap 11 adjacent to the second compartment 3. The flap 11 is pivotally mounted in the third tubular body 9 by means of a first pivot 12.

The first tubular body 5, the cover 6, the upper wall of the third tubular body 9 of the dosing section 4 and the slider 10 (in its closed position) encompass a first container space A. The second tubular body 7, the cup 8, the lower wall of the third tubular body 9 of the dosing section 4 and the flap 11 (in its closed position) encompass a second container space B. And the third tubular body 9 of the dosing section 4, the slider 10 and the flap 11 enclose a dosing space B. Accordingly, the dosing space 7 is arranged between the slider 10 and the flap 11.

One should note that the concrete construction of the combined storage, dosing and mixing device 1 shown in Fig. 1 is no necessary condition for the invention. In contrast, the first compartment 2, the second compartment 3 and the dosing section 4 may be shaped differently and may be assembled in another way.

For example, the upper, first compartment 2 may be shaped like a bottle without a separate cover and having its own lower wall bordering the first container space A. The cover 6 may have a hook 13 like shown in Fig. 1 or not. The first tubular body 5 may be attached to the cover 6 and/or to the third tubular body 9 in another way than screwed. For example, the parts may be mounted together by snap fit connections or may be glued or welded together.

Basically the same counts for the lower, second compartment 2, which may be shaped like a bottle as well. In this case, the cup 8 may be omitted or may be mounted onto the bottom of said bottle. The bottle may also have its own upper wall bordering the second container space B. The second tubular body 7 may be attached to the cup 8 and/or to the third tubular body 9 in another way than screwed. For example, the parts may be mounted together by snap fit connections or may be glued or welded together as well.

Although the cup 8 and the hook 13 are no necessary parts of the invention they are nevertheless useful. By means of the hook 13 the device 1 may be stored in hanging position. For example, it may be mounted on the frame of a baby buggy. By means of the cup 8 the liquid contained in the second container space B may be enjoined in a comfortable way.

Next, further parts of the dosing section 4 are described. The dosing section 4, apart from the parts described above, comprises actuating means 14 comprising an operating block 15, which is slidably mounted in the third tubular body 9 and may horizontally be moved in the position of the device 1 shown in Fig. 1. In the example shown in Fig. 1, the actuating means 14 furthermore comprise a push button 16, which is mounted to the operating block 15. However, instead of a push button 16 also an activating lever may be provided.

For controlling the operation of the slider 10, the operating block 15 is connected or coupled to the slider 10, so that the operating block 15 and the slider 10 synchronously move. For controlling the operation of the flap 11, the operation block 15 comprises a recess 17 interworking respectively cooperating with the flap 11. In this way, the actuating means 14 are mechanically coupled to the slider 10 and the flap 11.

Furthermore, the dosing section 4 comprises an optional lock 18 pivotally mounted in the push button 16 by means of a second pivot 19. Finally, the dosing section 4 comprises optional bumps 20 arranged in the upper wall of the third tubular body 9 and a shocking lever 21, which is part of the operating block 15 in this case.

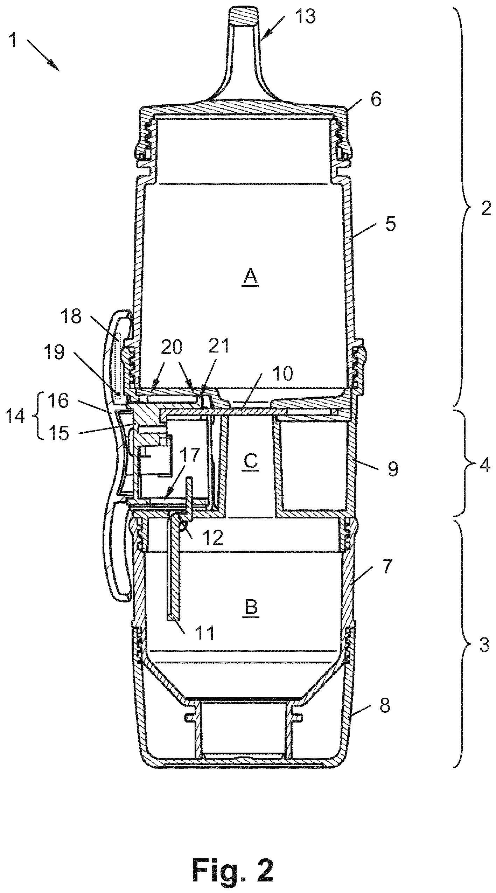

Next, the operation of the combined storage, dosing and mixing device 1 is described by reference to Figs. 1 and 2.

Fig. 1 shows the device 1 in a first state, in which the slider 10 is open while the flap 11 is closed. Fig. 2 shows the device in a second state, in which the slider 10 is closed while the flap 11 is open. The transition from the first state into the second state works as follows:
When the actuating means 14 are actuated and the operation block 15 is moved from the left to the right, the slider 10 is synchronously moved with the operation block 15 and continuously closes the upper aperture in the upper wall of the third tubular body 9. At the same time the recess 17 moves from the left to the right and at some point in time releases the flap 11 so that it swivels down driven by the gravity force. Meanwhile the upper aperture in the upper wall of the third tubular body 9 is fully closed by the slider 10. In this way, the actuating means 14 respectively the operation block 15 control the movement of the slider 10 and the flap 11 so that either the device 1 is in its first state or in its second state, and either the first container space A is connected to the dosing space C through the upper aperture, or the second container space B is connected to the dosing space C through the lower aperture. Accordingly, the dosing section 3 performs the function of a lock.

Apart from the first state and the second state, the device 1 upon movement of the operation block 15 passes a third state, in which both the slider 10 and the flap 11 are closed. In this third state, the slider 10 has already closed the upper aperture, but the flap 11 is not yet released and still closes the lower aperture.

By means of the optional lock 18 the actuating means 14, in particular the operating block 15, can be held in the first state. For this reason, the lock 18 may be swiveled to the right, so that it hinders the movement of the actuating means 14. The optional lock 18 may also be designed to hold the actuating means 14 / the operating block 15 in the third state in an alternative embodiment.

The device 1 may also comprise an optional spring (not shown in the Figs.) keeping the actuating means 14 respectively the slider 10 and the flap 11 in the first state or the third state when idled, i.e. when the push button 16 is not pressed.

The combination of the upper slider 10 and the lower flap 11 offers several advantages. First, the movement of the slider 10 cannot be hindered by the content in the first container space A (e.g. powder and/or crumbs), even if the content is agglomerated or clumped. Prior art designs having a flap instead of a slider 10 suffer from the weight and the resistance of the content in the first container space A acting against an upward movement of an upper flap, particularly when said content is agglomerated or clumped. In this case, opening the flap may get an impossible task and impatient users induce high forces onto the device 1 what may cause breakdown of fragile parts. Basically the same counts for an upper flap moving downward. While the flap may swivel down into the empty dosing space C, it cannot move upwards when the content in the first compartment A gets into the dosing space C. Even if the flap moves upwards, the dosing is compromised with high probability.

On the other hand, a flap 11 is beneficially for closing the lower aperture of the dosing section 4. In the example shown in the Figs.1, the flap 11 just opens towards the second container space B of the second compartment 3 and stays out of the dosing space C, i.e. it swivels downwards. In this way, dosing is not compromised, and the flap 11 easily opens. In this example, basically no user force is necessary as the flap 11 opens by the force of gravity, because it is heavier on the side of the pivot 12, which faces the dosing space C than on the side facing the recess 11.

The design of the dosing section 4 offers even one more advantages. According to the mechanism, the flap 11 just opens in the upright position of the device 1 when the first compartment 2 is positioned over the second compartment 2 and is kept close in the upside-down position of the device 1 when the first compartment 1 is positioned below the second compartment 2, even if the actuating means 14 are activated.

This is achieved by means of the automatic gravity opening of the flap 11 combined with the special cooperation with the recess 17. The recess 17 in the right position enables the flap to swivel down but it does not force it. So the flap 11 just opens in the upright position of the device 1, but stays closed in the upside-down position. In this way, the liquid in the lower, second container space B is hindered to flow into the dosing space C or even into the upper, first container space A what would possibly spoil the content of the first container space A, which usually shall be kept dry. If such a contamination stays undetected for a longer time, even substances injurious to health may evolve.

The flap mechanism is also useful when shaking the device 1, as the liquid in the lower, second container space B sloshing against the flap 11 even increases the closing force acting on the flap 11 and thus its seal effect. This is another reason that the content in the first container space A stays dry under any condition.

Another optional but yet useful feature is the shocking lever 21, which is mechanically coupled to the actuating means 14 or even part of the same like it is the case in the Figs. By a movement of the operating block 15, the shocking lever 21 moves over the bumps 20, when the actuating means 14 are activated and knocks against the upper wall of the dosing section 14 when it has passed a bump 21 and is released. In this way, the content in the upper, first container space A is loosened and agglomerations and clumps are released. Hence, the dosing operation is eased. In the example shown in the Figs. there are two bumps 21. However, any other count of bumps 21 is applicable, and instead of bumps 21 also ramps or other elevations (or indentations) may be used.

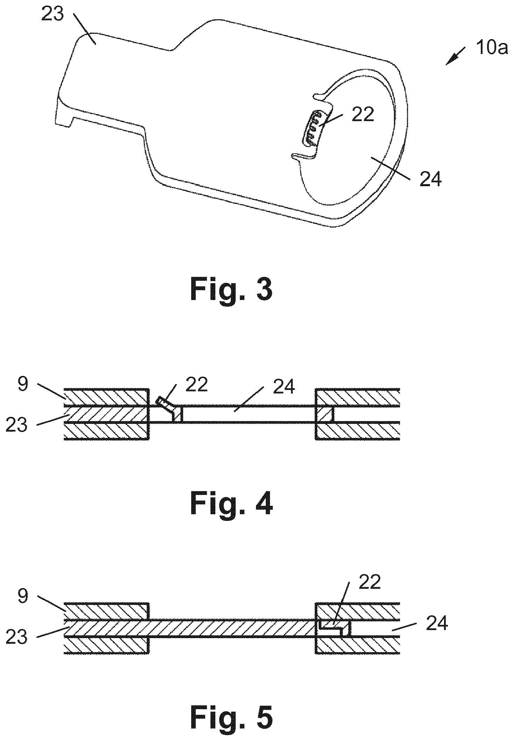

For basically the same reason, the device 1 may comprise an optional scratcher 22, which is part of a slider 10a or connected thereto and which protrudes into the first container space A, as this is shown in Fig. 3. In this way, a movement of the slider 10a causes a movement of the scratcher 22, which in turn scratches the bottom side of the content in the container space A. Accordingly, said content is loosened and agglomerations and clumps are released. Thus, the rake-like scratcher 22 is particularly useful to loosen solidified hygroscopic powders.

Concretely, Fig. 3 shows a base body 23 of the slider 10a with an opening 24 and the scratcher 22 fixedly connected to the base body 23. Additionally, Fig. 4 shows a detailed cross sectional view of the slider 10a in the third tubular body 9 in its open position, Fig. 5 in the closed position.

In Fig. 3, the scratcher 22 is designed to move, particularly swivel, between a scratching position, in which it protrudes into the first container space A, and an idle position, in which it is arranged in the plane of a base body 23 of the slider 10a. Fig. 3, which corresponds to an open position of the slider 10a (like this is shown in Fig. 1 and Fig. 4), shows the scratcher 22 swiveled upwards into the first container space A. In the closed position of the slider 10a (like this is shown in Fig. 2 and Fig. 5), the scratcher 22 swivels into its idle position, in which it is arranged in the plane of the base body 23.

While the embodiment shown in Fig. 3 is advantageous, other embodiments are possible as well. For example, the scratcher may have fixed protrusions, which move within the first container space A respectively in grooves in the third tubular body 9. The shape of the protrusions may also be different to the one shown in Fig. 3. For example, the scratcher 22 may have triangular teeth.

In Fig. 3 the connection between the scratcher 22 and the base body 23 simultaneously performs the function of a hinge and a spring, which forces the scratcher 22 upwards. Although this is an advantageous embodiment, there may also be a separate hinge and a separate spring.

All in all, the combined storage, dosing and mixing device 1 is very user friendly, and it is almost impossible to use it in the wrong way. It just can be used in the intended upright position, and by activating the lock 18 it cannot be actuated unintended, for example when the device 1 is transported in a bag. In addition, the shocking mechanism supports the dosing process.

By provision of a first compartment 2 of appropriate size, many dosing sequences can be performed and by changing the liquid in the second compartment 3 many servings may be prepared. In this context, one should note that also more than one doses may be mixed with one portion of liquid. Thus, the end product may be varied and adapted to personal preferences with high accuracy and repeatability.

The combined storage, dosing and mixing device 1 may be generally used for any mixing task. Particularly, it is useful for baby formula, mixing protein shakes or milk shakes, preparing cereals, etc. Accordingly, the first container space A may be filled with powder or crumbs or a mixture of both, and the second container space B may be filled with water, milk or any other liquid (cold or hot). Even the preparation of Vinaigrette is possible, if herbs are filled into the first container space A and vinegar and oil is filled into the second container space B. Also technical applications are imaginable, for example mixing paints, glue, putty and the like.

It is noted that the invention is not limited to the embodiments disclosed hereinbefore, but combinations of the different variants are possible. In reality, the combined storage, dosing and mixing device 1 may have more or less parts than shown in the Figures. The combined storage, dosing and mixing device 1 and parts thereof may also be shown in different scales and may be bigger or smaller than depicted. Finally, the description may comprise subject matter of further independent inventions.

### List of reference numerals

- 1: Combined storage, dosing and mixing device
- 2: first compartment
- 3: second compartment
- 4: dosing section
- 5: first tubular body

- 6: cover
- 7: second tubular body
- 8: cup
- 9: third tubular body
- 10, 10a: slider

- 11: flap
- 12: first pivot
- 13: hook
- 14: actuating means
- 15: operating block

- 16: push button
- 17: recess
- 18: lock
- 19: second pivot
- 20: bump

- 21: shocking lever
- 22: scratcher
- 23: base body
- 24: opening

- A: first container space
- B: second container space
- C: dosing space

## Claims

1. Combined storage, dosing and mixing device (1), comprising
- a first compartment (2) with a first container space (A) and a second compartment (3) with a second container space (B) as well as
- a dosing section (4) between the first compartment (2) and the second compartment (3),
**characterized in that**
- the dosing section (4) comprises a translatory movable slider (10, 10a) adjacent to the first compartment (2), a pivotally movable flap (11) adjacent to the second compartment (3) and a dosing space (C) between the slider (10, 10a) and the flap (11).

2. The device (1) as claimed in claim 1, **characterized in that** the flap (11) just opens towards the second container space (B) of the second compartment (3) and stays out of the dosing space (C).

3. The device (1) as claimed in any one of claims 1 or 2, **characterized in** actuating means (14) mechanically coupled to the slider (10, 10a) and the flap (11).

4. The device (1) as claimed in any one of claims 1 to 3, **characterized in that** the actuating means (14) are embodied to open the slider (10, 10a) while the flap (11) is closed in a first state or to open the flap (11) while the slider (10, 10a) is closed in a second state.

5. The device (1) as claimed in claim 4, **characterized in that** the actuating means (14) are embodied to keep the slider (10, 10a) and the flap (11) closed in a third state.

6. The device (1) as claimed in any one of claims 1 to 5, **characterized in** a lock (18), blocking respectively holding the actuating means (14) in the first state or the third state.

7. The device (1) as claimed in any one of claims 1 to 6, **characterized in that** the actuating means (14) comprise a push button (16) or an activating lever.

8. The device (1) as claimed in any one of claims 1 to 7, **characterized in** a shocking lever (21) mechanically coupled to the actuating means (14), which moves over bumps (20) or ramps when the actuating means (14) are activated and knocks against a wall of the device (1) when it has passed the bump (20) or ramp and is released.

9. The device (1) as claimed in any one of claims 1 to 8, **characterized in** a scratcher (22), which is part of the slider (10a) or connected thereto and which protrudes into the first container space (A).

10. The device (1) as claimed in claim 9, **characterized in that** the scratcher (22) is designed to move between a scratching position, in which it protrudes into the first container space (A), and an idle position, in which it is arranged in the plane of a base body (23) of the slider (10a).

11. The device (1) as claimed in any one of claims 1 to 10, **characterized in that** the flap (11) just opens in the upright position of the device (1) when the first compartment (2) is positioned over the second compartment (2) and is kept close in the upside-down position of the device (1) when the first compartment (1) is positioned below the second compartment (2), even if the actuating means (14) are activated.

12. The device (1) as claimed in any one of claims 1 to 11, **characterized in that** the actuating means (14) comprise a recess (17) cooperating with the flap (11), wherein the recess (17) allows the flap (11) to rotate in a dedicated position or dedicated positions of the recess (17).

13. The device (1) as claimed in claim 12, **characterized in that** the flap (11) is pivotally mounted by means of a pivot (12) arranged at a distance from the dosing space (C) and is heavier on the side of the pivot (12), which faces the dosing space (C) than on the side facing the recess (11), when the device (1) is in its first state and held in its upright position when the first compartment (2) is positioned over the second compartment (2).

14. The device (1) as claimed in any one of claims 12 to 13, **characterized in that** the recess (17) is arranged above the flap (11) when the device (1) is held in its upright position and when the first compartment (2) is positioned over the second compartment (2).

15. The device (1) as claimed in any one of claims 1 to 14, **characterized in** a spring keeping the actuating means (14) respectively the slider (10, 10a) and the flap (11) in the first state or the third state when idled.
